# DEMANDE DE BREVET EUROPEEN

(11) **EP 1 013 909 A1**
(43) Date de publication de la demande: **28.06.2000**
(21) Numéro de dépôt: 99440371.5
(22) Date de dépôt: 23.12.1999
(51) Int. Cl.: F02B 27/02

(54) **Répartiteur d'admission d'air pour un moteur à combustion interne**

(30) Priorité: 24.12.1998 FR 9816601
(71) Demandeur: M.G.I. Coutier S.A., 01410 Champfromier (FR)
(72) Inventeur: Jaunasse, Philippe, 75015 Paris (FR); Prique, Eric, 68720 Luemschwiller (FR)
(74) Mandataire: Nithardt, Roland

(57) **Abrégé**

La présente invention concerne un répartiteur d'admission d'air pour un moteur à combustion internes à deux rangées de cylindres disposées en V qui fournit une distribution d'air équilibrée pour l'ensemble des cylindres, à admission variable en continu pour optimiser le fonctionnement du moteur quelles que soient les conditions de régime et de charge du moteur, et qui peut être disposé de façon peu encombrante dans l'environnement du moteur.

Le répartiteur comporte un tambour central rotatif (50) monté à l'intérieur dudit corps de répartiteur (14) et constitué d'éléments tubulaires rotatifs (25, 26) distincts, montés adjacents chacun en regard d'un orifice d'entrée (15', 16') d'un conduit d'admission externe (15, 16) s'étendant jusqu'à un cylindre correspondant du moteur. Il est caractérisé en ce que les éléments tubulaires rotatifs (25, 26) sont cylindriques, ont des dimensions sensiblement identiques et sont coaxiaux et en ce que ledit répartiteur comporte des moyens d'étanchéité (32) disposés entre les éléments tubulaires rotatifs (25, 26) et le corps de répartiteur (14), agencés pour réaliser l'étanchéité des conduits d'admission internes (30, 31).

## Description

La présente invention concerne un répartiteur d'admission d'air pour un moteur à combustion interne comportant une première rangée et une seconde rangée de cylindres disposées en V, le répartiteur d'admission comportant un corps de répartiteur tubulaire placé entre les deux rangées de cylindres, des conduits d'admission externes partant des deux côtés du corps de répartiteur, chaque conduit s'étendant jusqu'à un cylindre correspondant, et un tambour central rotatif monté à l'intérieur dudit corps et constitué d'éléments tubulaires rotatifs distincts, adjacents et alternés, chacun en regard d'un orifice d'entrée d'un conduit d'admission externe correspondant, le tambour central rotatif définissant un passage d'arrivée d'air intérieur agencé pour que l'air, provenant de ladite arrivée d'air, circule librement d'un élément tubulaire rotatif à un autre et lesdits éléments tubulaires rotatifs comportant chacun une ouverture radiale communiquant avec ladite arrivée d'air et définissant chacun avec ledit corps de répartiteur un conduit d'admission interne à dimensions variables en continu s'étendant de ladite ouverture radiale audit orifice d'entrée du conduit d'admission externe correspondant, les conduits d'admission internes associés à la première rangée de cylindres s'étendant autour de leur élément tubulaire rotatif respectif dans un sens opposé à celui des conduits d'admission internes associés à la deuxième rangée de cylindres s'étendant autour de leur élément tubulaire rotatif et les conduits d'admission externes ayant des formes et des dimensions sensiblement identiques ainsi que les conduits d'admission internes, le répartiteur comportant également un mécanisme de commande agencé pour entraîner simultanément en rotation, à la même vitesse angulaire mais en sens contraire, lesdits éléments tubulaires rotatifs associés respectivement à la première rangée et à la seconde rangée de cylindres.

On connaît déjà des répartiteurs d'admission d'air qui fournissent une distribution d'air équilibrée pour l'ensemble des cylindres des deux rangées de cylindres. Certains répartiteurs d'admission d'air de l'art antérieur permettent seulement un réglage de l'admission d'air par paliers. C'est-à-dire qu'ils fournissent deux, parfois trois, longueurs de conduits d'admission possibles. Typiquement, pour un régime de fonctionnement du moteur bas, les conduits d'admission ont une première longueur totale, correspondant à une longueur importante mieux adaptée à une vitesse d'écoulement d'air relativement faible dans les conduits (importante masse d'air en mouvement dans les conduits). Quand le moteur fonctionne à haut régime, ou du moins au-dessus d'un régime moteur prédéterminé, les conduits d'admission ont une seconde longueur totale, correspondant à une petite longueur mieux adaptée à une vitesse d'écoulement d'air beaucoup plus importante dans les conduits (faible masse d'air en mouvement dans les conduits, moins de pertes de charge). Ces répartiteurs d'admission présentent un inconvénient majeur, l'admission d'air n'est pas adaptée à chaque condition de régime et de charge du moteur.

On connaît aussi des répartiteurs d'admission d'air à longueur variable en continu permettant d'optimiser le fonctionnement du moteur. Certains de ces répartiteurs de l'art antérieur sont adaptés uniquement à des moteurs multicylindres en lignes. Lorsqu'on utilise ce type de répartiteur d'admission d'air avec un moteur à deux rangées de cylindres disposées en V, il n'est pas possible d'obtenir une répartition d'air équilibrée pour l'ensemble des cylindres. Par conséquent, le remplissage des cylindres n'est pas homogène. Cela génère des perturbations dans le fonctionnement du moteur, telles qu'une puissance et des effets d'acoustiques légèrement différents d'une rangée de cylindres à l'autre. En outre, le corps de répartiteur doit être placé à l'extérieur des deux rangées de cylindres car les conduits d'admission externes s'étendent tous dans le même sens, ce qui est un inconvénient majeur en ce qui concerne l'encombrement.

On connaît également, dans la publication EP-A-848 145, un répartiteur d'admission d'air à longueur variable en continu adapté à des moteurs à deux rangées de cylindres disposées en V. Le tambour central est constitué d'éléments tubulaires adjacents et décalés alternativement en direction de la rangée de cylindres correspondante. Les éléments tubulaires associés à une des rangées de cylindres et les éléments tubulaires associés à l'autre rangée de cylindres sont entraînés en rotation en sens inverse par deux broches d'entraînement distinctes et parallèles, traversant le plénum. Néanmoins, la géométrie irrégulière du plénum obtenue par les éléments tubulaires non disposés coaxialement ainsi que la présence des deux broches d'entraînement contribuent à perturber considérablement le flux d'air circulant dans le répartiteur dont les conséquences se répercutent directement sur les performances du moteur.

Le but de la présente invention est de pallier ces divers inconvénients en fournissant un répartiteur d'admission d'air pour un moteur à combustion internes à deux rangées de cylindres disposées en V qui fournit une distribution d'air équilibrée pour l'ensemble des cylindres, à admission variable en continu pour optimiser le fonctionnement du moteur quelles que soient les conditions de régime et de charge du moteur, et qui peut être disposé de façon peu encombrante dans l'environnement du moteur, tout en optimisant la circulation du flux d'air dans le plénum.

Ce but est atteint par un répartiteur d'admission d'air tel que décrit en préambule, caractérisé en ce que lesdits éléments tubulaires rotatifs sont cylindriques, ont des dimensions sensiblement identiques et sont coaxiaux et en ce que ledit répartiteur comporte des moyens d'étanchéité disposés entre les éléments tubulaires rotatifs et le corps de répartiteur, agencés pour réaliser l'étanchéité des conduits d'admission internes.

De préférence, les ouvertures radiales des éléments tubulaires rotatifs associés à la première rangée de cylindres sont alignées ainsi que celles des éléments tubulaires rotatifs associés à la seconde rangée de cylindres, les orifices d'entrée des conduits d'admission externes associés à la première rangée de cylindres étant alignés ainsi que ceux des conduits d'admission externes associés à la seconde rangée de cylindre.

Selon un mode de réalisation préféré, ledit corps de répartiteur comporte un alésage longitudinal cylindrique dans lequel sont ménagées des gorges annulaires juxtaposées, l'orifice d'entrée d'un conduit d'admission externe étant ménagé au fond de chaque gorge annulaire, chaque élément tubulaire rotatif étant disposé dans ledit alésage cylindrique en regard d'une gorge annulaire correspondante de manière à former avec celle-ci un conduit d'admission interne circulaire, lesdits éléments tubulaires rotatifs ayant une longueur au moins égale à la largeur des gorges annulaires et un diamètre extérieur sensiblement égal au diamètre intérieur dudit alésage longitudinal.

Chaque élément tubulaire rotatif comporte avantageusement deux rainures annulaires périphériques d'extrémité recevant chacune un segment annulaire à serrage vers l'extérieur appuyant de manière étanche sur la paroi de l'alésage longitudinal.

Selon un mode de réalisation préféré, ledit mécanisme de commande comporte un arbre d'entraînement coaxial auxdits éléments tubulaires rotatifs et couplé à un moteur électrique, les éléments tubulaires rotatifs associés à la première rangée de cylindres étant liés rigidement audit arbre d'entraînement, les éléments tubulaires rotatifs associés à la seconde rangée de cylindres étant agencés pour tourner librement par rapport à cet arbre d'entraînement, et un ensemble inverseur actionné par ledit arbre d'entraînement et agencé pour entraîner les éléments tubulaires rotatifs associés à la seconde rangée de cylindres.

L'ensemble inverseur est de préférence un ensemble inverseur à engrenages qui peut comprendre une broche d'entraînement parallèle à l'arbre d'entraînement, cette broche d'entraînement comportant un pignon d'entrée en prise avec une roue dentée liée à l'arbre d'entraînement et plusieurs pignons de sortie chacun en prise avec une couronne dentée correspondante liée à chaque élément tubulaire rotatif associé à un cylindre de la seconde rangée de cylindres, cette couronne dentée pouvant être intérieure ou de préférence extérieure audit élément tubulaire correspondant.

La présente invention et ses avantages apparaîtront mieux dans la description suivante d'un mode de réalisation de l'invention, en référence aux dessins annexés dans lesquels:
- la figure 1 est une vue latérale schématique d'un moteur à combustion interne à deux rangées de cylindres disposées en V pourvu du répartiteur d'admission d'air de la présente invention;
- la figure 2 est une vue schématique en coupe transversale d'un mode de réalisation du répartiteur d'admission d'air de l'invention;
- la figure 3 est une vue éclatée en perspective du répartiteur d'admission d'air;
- la figure 4 est une vue détaillée d'un élément tubulaire rotatif du répartiteur d'admission d'air; et
- les figures 5 et 6 sont des schémas cinématiques représentant deux exemples de mécanisme de commande des éléments tubulaires rotatifs du répartiteur d'admission de l'invention.

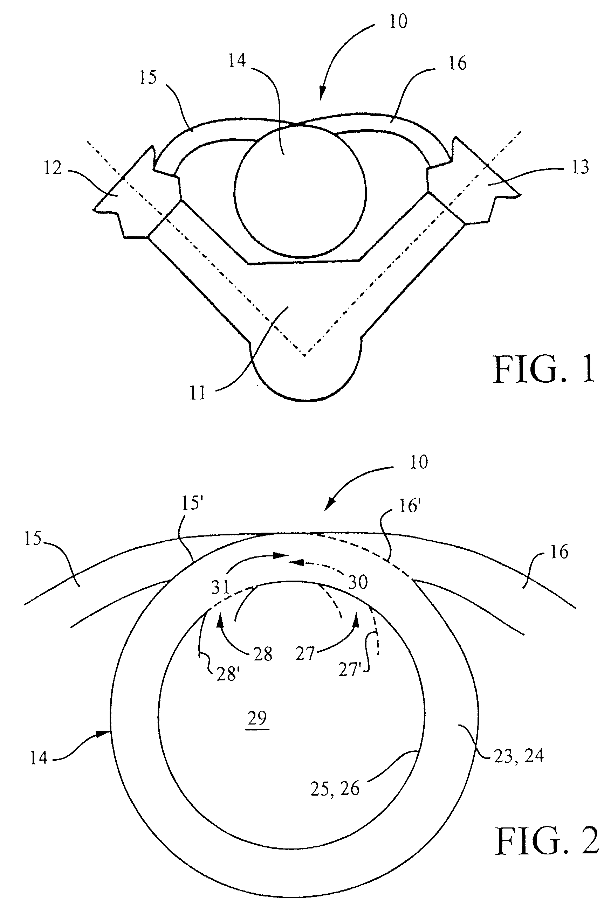

En référence à la figure 1, le répartiteur d'admission d'air 10 de la présente invention est monté sur un moteur thermique à combustion interne 11 comportant une première rangée 12 et une seconde rangée 13 de cylindres disposées en V. L'angle d'ouverture du V, tel qu'il est représenté, est approximativement égal à 90°, mais peut être différent selon la configuration du moteur. Chaque rangée de cylindres comporte trois cylindres, par exemple, disposés de manière conventionnelle en quinconce de sorte qu'un cylindre de la première rangée de cylindres 12 est adjacent à au moins un cylindre de la seconde rangée de cylindres 13. Dans l'exemple illustré, les cylindres sont agencés de telle sorte que les soupapes d'admission d'air sont disposées à l'intérieur des culasses montées sur les deux rangées de cylindres 12, 13.

Le répartiteur d'admission d'air 10 comporte un corps de répartiteur 14 placé entre les deux rangées de cylindres 12, 13, sensiblement dans le plan médian de celles-ci. Ce corps de répartiteur 14 comporte six conduits d'admission externes 15, 16 partant, de façon équilibrée, des deux côtés du corps de répartiteur 14, depuis le haut de celui-ci, et allant chacun jusqu'à la culasse d'un cylindre respectif.

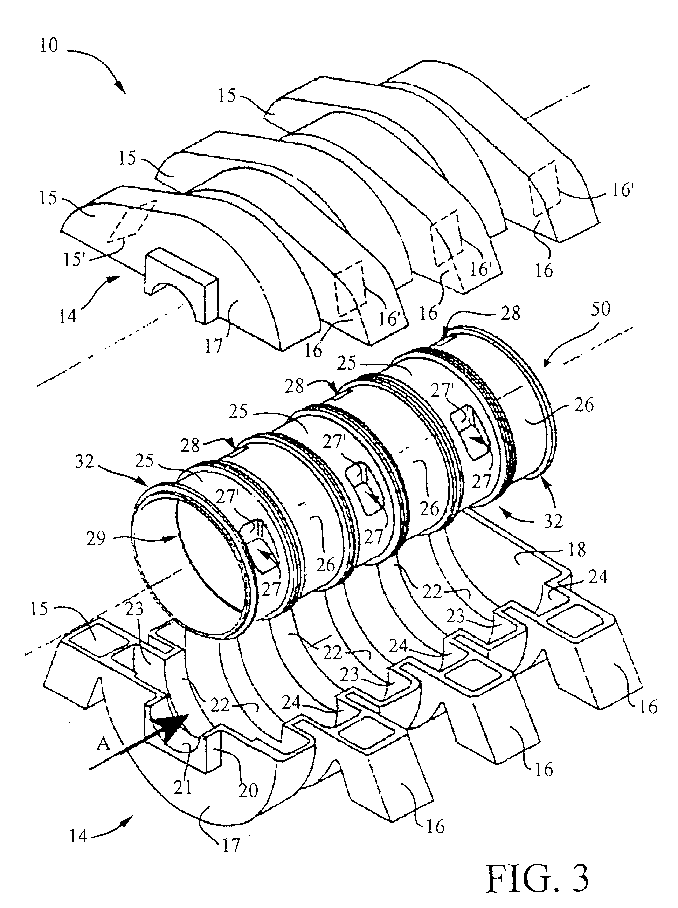

En référence aux figures 2 et 3, le corps de répartiteur 14 a une forme sensiblement allongée et est tubulaire. Il est réalisé en matières plastiques moulées ou injectées et est formé par une partie inférieure et une partie supérieure complémentaires assemblées l'une à l'autre, selon un plan horizontal approximativement médian à ce corps. Les conduits d'admission externes 15, 16 ont des formes et des dimensions sensiblement identiques, et s'étendent parallèlement entre eux. Un conduit d'admission externe 15 associé à un cylindre de la première rangée de cylindres 12 est adjacent à au moins un conduit d'admission externe 16 associé à un cylindre de la seconde rangée de cylindres 13.

Le corps de répartiteur tubulaire 14 est fermé à ses deux extrémités par deux parois planes 17, 18, en forme de disque, sensiblement perpendiculaires à l'axe longitudinal du corps de répartiteur 14. La paroi plane 17 comporte un raccord tubulaire 20 faisant saillie extérieurement à partir de son centre. Ce raccord tubulaire 20 définit un trou cylindrique traversant 21 recevant de l'air filtré d'une arrivée d'air, représentée schématiquement par la flèche A, comprenant de manière conventionnelle un col d'entrée d'air, un filtre à air et un boîtier papillon.

Le corps de répartiteur 14 comporte un alésage cylindrique longitudinal 22 s'étendant entre les deux parois planes 17, 18. Le diamètre de cet alésage 22 est sensiblement plus grand que le diamètre du trou traversant 21. Six gorges annulaires 23, 24 juxtaposées sont ménagées dans l'alésage 22, concentriques à celui-ci. Chaque gorge annulaire 23, 24 est disposée en regard d'un conduit d'admission externe 15, 16 correspondant. Un orifice d'entrée 15', 16' d'un conduit d'admission externe 15, 16 débouche au fond de chaque gorge annulaire 23, 24, respectivement. Les orifices d'entrée 15' des conduits d'admission externes 15 associés à la première rangée de cylindres 12 sont alignés. De même, les orifices d'entrée 16' des conduits d'admission externes 16 associés à la seconde rangée de cylindres 13 sont alignés.

Le répartiteur d'admission 10 comporte un tambour central rotatif 50 logé dans l'alésage 22 et formé de six éléments tubulaires 25, 26 distincts. Ceux-ci sont cylindriques et ont des dimensions sensiblement identiques. Ces éléments tubulaires 25, 26 ont une longueur légèrement supérieure à la largeur des gorges annulaires 23, 24 et un diamètre extérieur sensiblement égal au diamètre intérieur de l'alésage longitudinal 22. La longueur des six éléments tubulaires 25, 26 empilés est sensiblement égale à la distance entre les deux parois planes 17, 18 d'extrémité du corps de répartiteur 14. Chaque élément tubulaire 25, 26 comporte une ouverture radiale 27, 28, respectivement.

Les éléments tubulaires 25, 26 sont logés adjacents et coaxiaux dans l'alésage cylindrique longitudinal 22, chacun en regard d'une gorge annulaire 23, 24 correspondante. Ces éléments tubulaires sont disposés de sorte que les ouvertures radiales 27 des éléments tubulaires 25 associés à la première rangée de cylindres 12 sont alignées et que les ouvertures radiales 28 des éléments tubulaires 26 associés à la seconde rangée de cylindres 13 sont alignées. Un élément tubulaire 25 associé à un cylindre de la première rangée de cylindres 12 est adjacent à au moins un élément tubulaire 26 associé à un cylindre de la seconde rangée de cylindres 13. Ces éléments tubulaires 25, 26 sont agencés pour tourner dans l'alésage cylindrique 22.

Le tambour central rotatif 50 formé des éléments tubulaires rotatifs 25, 26 définit un passage d'arrivée d'air 29 intérieur sensiblement cylindrique et disposé en prolongement du trou cylindrique 21 du raccord 20 de la paroi plane 17. Ce passage d'arrivée d'air 29 appelé aussi plénum reçoit l'air filtré provenant de l'arrivée d'air, indiquée par la flèche A. Grâce à la géométrie régulière et cylindrique de ce passage d'arrivée d'air 29, l'air d'admission circule alors librement d'un élément tubulaire 25 à un autre 26, ces éléments étant agencés coaxialement pour ne pas perturber le flux d'air et ne pas entraîner de pertes de charges à l'admission.

Chaque élément tubulaire rotatif 25, 26 définit avec le corps de répartiteur 14, en particulier avec la gorge annulaire 23, 24 correspondante, un conduit d'admission interne circulaire 30, 31, représentés schématiquement sur la figure 2, à longueur variable en continu, s'étendant de l'ouverture radiale 27, 28, en communication avec le passage d'arrivée d'air 29, à l'orifice d'entrée 15', 16' du conduit d'admission externe 15, 16 correspondant. Les conduits d'admission internes 30, 31 ont des dimensions et des formes sensiblement identiques. Les conduits d'admission internes 30 associés à la première rangée de cylindres 12 s'étendent autour de leur élément tubulaire 25 dans le sens inverse des aiguilles d'une montre. Les conduits d'admission internes 31 associés à la seconde rangée de cylindres 13 s'étendent autour de leur élément tubulaire 26 dans le sens des aiguilles d'une montre, donc dans un sens opposé.

Les parois 27', 28' de chaque ouverture radiale 27, 28, respectivement, sont agencées pour orienter l'air, lors de son passage dans l'ouverture radiale, dans le sens du conduit d'admission interne 30, 31 correspondant. Elles sont de préférence incurvées et font un angle par rapport à un rayon de l'élément tubulaire rotatif 25, 26 associé.

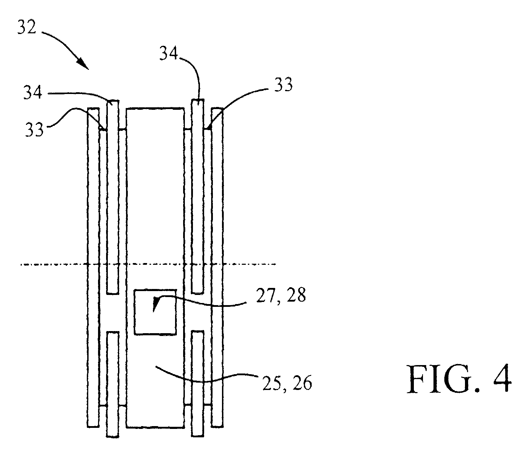

Le répartiteur d'admission d'air 10 comporte des moyens d'étanchéité 32 disposés entre le corps de répartiteur 14 et le tambour central rotatif 50. Ces moyens d'étanchéité 32, représentés en détail sur la figure 4, sont agencés pour réaliser l'étanchéité des conduits d'admission internes 30, 31. Chaque élément tubulaire rotatif 25, 26 comporte deux rainures annulaires périphériques d'extrémité 33 recevant chacune un segment annulaire 34 à serrage vers l'extérieur appuyant de manière étanche sur la paroi de l'alésage longitudinal 22 du corps de répartiteur 14.

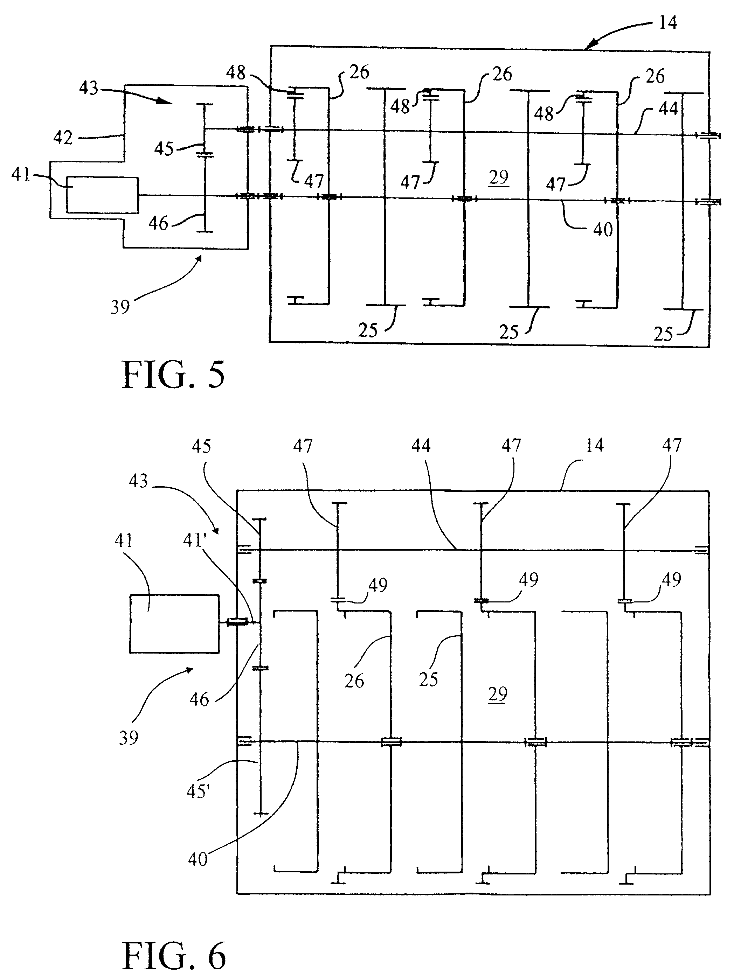

Les figures 5 et 6 sont des schémas cinématiques représentant deux exemples de réalisation d'un mécanisme de commande 39 des éléments tubulaires rotatifs 25, 26 du répartiteur d'admission 14. Ce mécanisme de commande 39 est agencé pour entraîner simultanément en rotation, à la même vitesse angulaire mais en sens contraire, les éléments tubulaires rotatifs 25, 26 associés respectivement à la première rangée 12 et à la seconde 13 rangée de cylindres.

Dans les deux exemples, le mécanisme de commande 39 comporte un arbre d'entraînement 40 coaxial aux éléments tubulaires rotatifs 25, 26, et monté pivotant par rapport au corps de répartiteur d'admission 14. Cet arbre d'entraînement 40 est couplé directement (fig. 5) ou par un train d'engrenage 45', 46 (fig. 6) à un moteur d'entraînement 41, électrique par exemple. Ce moteur 41 peut être logé dans un boîtier 42 fixé dans le prolongement du corps de répartiteur 14 du côté correspondant à la paroi plane 18 par exemple (fig. 5). Le moteur d'entraînement 41 est asservi aux conditions de régime et de charge du moteur à combustion interne 11. Les éléments tubulaires 25 associés à la première rangée de cylindres 12 sont liés rigidement à l'arbre d'entraînement 40. Les éléments tubulaires 26 associés à la seconde rangée de cylindres 13 sont agencés pour pivoter librement par rapport à cet arbre d'entraînement 40. Le mécanisme de commande 39 comporte en outre un ensemble inverseur 43 à engrenages par exemple, actionné par l'arbre d'entraînement 40 (fig. 5) ou un arbre moteur 41' (fig. 6) et agencé pour entraîner les éléments tubulaires 26 associés à la seconde rangée de cylindres 13.

L'ensemble inverseur à engrenages 43 comprend une broche d'entraînement 44 montée pivotante par rapport au corps de répartiteur d'admission 14 et disposée sensiblement parallèle à l'arbre d'entraînement 40. Celle-ci comporte un pignon d'entrée 45 logé dans le boîtier 42 (fig. 5) ou dans le corps de répartiteur 14 (fig. 6) et en prise avec une roue dentée 46 liée à l'arbre d'entraînement 40 (fig. 5) ou à l'arbre moteur 41' (fig. 6). La broche d'entraînement 44 comporte trois pignons de sortie 47, chacun en prise avec une couronne dentée 48, 49 correspondante liée à chaque élément tubulaire rotatif 26. Dans l'exemple de réalisation illustré par la figure 5, la couronne dentée 48 est intérieure auxdits éléments tubulaires 26 et les pignons de sortie 47 sont disposés dans le passage d'arrivée d'air 29. Dans l'exemple de réalisation illustré par la figure 6, la couronne dentée 49 est extérieure auxdits éléments tubulaires 26 et les pignons de sortie 47 sont disposés à l'extérieur du passage d'arrivée d'air 29. Ainsi, grâce à cette disposition particulière, le flux d'air n'est aucunement perturbé par l'ensemble inverseur.

Les caractéristiques des divers engrenages de l'ensemble inverseur à engrenages 43 sont à la portée de l'homme du métier et ne sont pas données ici.

Le répartiteur d'admission d'air 10 de la présente invention permet d'optimiser le fonctionnement du moteur à combustion interne 11. Il fournit une distribution d'air équilibrée pour l'ensemble des cylindres des deux rangées de cylindres 12, 13 car la longueur des conduits d'admission internes 30, 31 est toujours identique. De plus, cette distribution est effectuée avec un minimum de perturbation dans le flux d'air grâce à la forme et à la disposition des éléments tubulaires et à leur mécanisme d'entraînement. La rotation des éléments tubulaires rotatifs 25, 26 permet de modifier en continu la dimension longitudinale des conduits d'admission internes 30, 31, permettant d'adapter l'admission d'air à chaque condition de régime et de charge du moteur 11. Pour un régime de fonctionnement du moteur bas, les conduits d'admission internes 30, 31 sont longs de manière à avoir une importante masse d'air en mouvement dans les conduits, correspondant mieux à une vitesse d'écoulement d'air relativement faible dans les conduits. Quand le moteur fonctionne à haut régime, les conduits d'admission internes sont courts pour limiter la masse d'air en mouvement dans les conduits d'admission (moins de pertes de charge), correspondant mieux à une vitesse d'écoulement d'air beaucoup plus importante dans les conduits. Le remplissage des cylindres est homogène, par conséquent la puissance et les effets d'acoustiques sont identiques d'une rangée de cylindres 12 à l'autre 13. En outre, le corps de répartiteur 14 est placé dans l'espace disponible entre les deux rangées de cylindres 12, 13 du moteur 11, ceci est très important car cet agencement permet de gagner un espace précieux dans l'environnement du moteur.

La présente invention n'est pas limitée au mode de réalisation décrit précédemment, mais s'étend à toutes modifications ou variantes évidentes pour l'homme du métier. En particulier, l'angle d'ouverture du V formé par les deux rangées de cylindres et le nombre de cylindres par rangée peuvent être différents. Les formes et les dimensions du corps de répartiteur et du tambour central rotatif peuvent être différentes. Enfin, II est évident qu'il existe de nombreuses autres cinématiques possibles qui remplissent des fonctions identiques à celles du mécanisme de commande des éléments tubulaires rotatifs décrit dans la présente demande.

## Revendications

1. Répartiteur d'admission d'air pour un moteur à combustion interne comportant une première rangée et une seconde rangée de cylindres disposées en V, le répartiteur d'admission comportant un corps de répartiteur tubulaire placé entre les deux rangées de cylindres, des conduits d'admission externes partant des deux côtés du corps de répartiteur, chaque conduit s'étendant jusqu'à un cylindre correspondant, et un tambour central rotatif (50) monté à l'intérieur dudit corps et constitué d'éléments tubulaires rotatifs (25, 26) distincts, adjacents et alternés, chacun en regard d'un orifice d'entrée (15', 16') d'un conduit d'admission externe (15, 16) correspondant, le tambour central rotatif (50) définissant un passage d'arrivée d'air (29) intérieur agencé pour que l'air, provenant de ladite arrivée d'air, circule librement d'un élément tubulaire rotatif (25) à un autre (26) et lesdits éléments tubulaires rotatifs (25, 26) comportant chacun une ouverture radiale (27, 28) communiquant avec ladite arrivée d'air et définissant chacun avec ledit corps de répartiteur (14) un conduit d'admission interne (30, 31) à dimensions variables en continu s'étendant de ladite ouverture radiale (27, 28) audit orifice d'entrée (15', 16') du conduit d'admission externe (15, 16) correspondant, les conduits d'admission internes (30) associés à la première rangée de cylindres (12) s'étendant autour de leur élément tubulaire rotatif (25) respectif dans un sens opposé à celui des conduits d'admission internes (31) associés à la deuxième rangée de cylindres (13) s'étendant autour de leur élément tubulaire rotatif (26) et les conduits d'admission externes (15, 16) ayant des formes et des dimensions sensiblement identiques ainsi que les conduits d'admission internes (30, 31), le répartiteur comportant également un mécanisme de commande (39) agencé pour entraîner simultanément en rotation, à la même vitesse angulaire mais en sens contraire, lesdits éléments tubulaires rotatifs (25, 26) associés respectivement à la première rangée (12) et à la seconde rangée (13) de cylindres, caractérisé en ce que lesdits éléments tubulaires rotatifs (25, 26) sont cylindriques, ont des dimensions sensiblement identiques et sont coaxiaux et en ce que ledit répartiteur comporte des moyens d'étanchéité (32) disposés entre les éléments tubulaires rotatifs (25, 26) et le corps de répartiteur (14), agencés pour réaliser l'étanchéité des conduits d'admission internes (30, 31).

2. Répartiteur d'admission selon la revendication 1, caractérisé en ce que les ouvertures radiales (27) des éléments tubulaires rotatifs (25) associés à la première rangée de cylindres (12) sont alignées ainsi que celles (28) des éléments tubulaires rotatifs (26) associées à la seconde rangée de cylindres (13), les orifices d'entrée (15') des conduits d'admission externes (15) associés à la première rangée de cylindres (12) étant alignés ainsi que ceux (16') des conduits d'admission externes (16) associés à la seconde rangée de cylindre (13).

3. Répartiteur d'admission selon la revendication 2, caractérisé en ce que ledit corps de répartiteur (14) comporte un alésage longitudinal (22) cylindrique dans lequel sont ménagées des gorges annulaires (23, 24) juxtaposées, l'orifice d'entrée (15', 16') d'un conduit d'admission externe (15, 16) étant ménagé au fond de chaque gorge annulaire (23, 24), en ce que chaque élément tubulaire rotatif (25, 26) est disposé dans ledit alésage longitudinal (22) en regard d'une gorge annulaire (23, 24) correspondante de manière à former avec celle-ci un conduit d'admission interne (30, 31) circulaire, lesdits éléments tubulaires rotatifs (25, 26) ayant une longueur au moins égale à la largeur des gorges annulaires (23, 24) et un diamètre extérieur sensiblement égal au diamètre intérieur dudit alésage longitudinal (22).

4. Répartiteur d'admission selon la revendication 3, caractérisé en ce que chaque élément tubulaire rotatif (25, 26) comporte deux rainures annulaires périphériques (33) d'extrémité recevant chacune un segment annulaire (34) à serrage vers l'extérieur appuyant de manière étanche sur la paroi de l'alésage longitudinal (22).

5. Répartiteur d'admission selon la revendication 1, caractérisé en ce que ledit mécanisme de commande (39) comporte un arbre d'entraînement (40) coaxial auxdits éléments tubulaires rotatifs (25, 26) et couplé à un moteur d'entraînement (41), les éléments tubulaires rotatifs (25) associés à la première rangée de cylindres (12) étant liés rigidement audit arbre d'entraînement (40), les éléments tubulaires rotatifs (26) associés à la seconde rangée de cylindres (13) étant agencés pour tourner librement par rapport à cet arbre d'entraînement (40), et un ensemble inverseur (43) actionné par ledit arbre d'entraînement (40) étant agencé pour entraîner les éléments tubulaires rotatifs (26) associés à la seconde rangée de cylindres (13).

6. Répartiteur d'admission selon la revendication 5, caractérisé en ce que l'ensemble inverseur (43) est un ensemble inverseur à engrenages qui comprend une broche d'entraînement (44) parallèle à l'arbre d'entraînement (40), cette broche d'entraînement (44) comportant un pignon d'entrée (45) en prise avec une roue dentée (46) liée à l'arbre d'entraînement (40), et en ce que ladite broche d'entraînement (44) comporte plusieurs pignons de sortie (47) chacun en prise avec une couronne dentée (48, 49) correspondante liée à chaque élément tubulaire rotatif (26) associé à un cylindre de la seconde rangée de cylindres (13).

7. Répartiteur d'admission selon la revendication 6, caractérisé en ce que la couronne dentée (48) est disposée à l'intérieur desdits éléments tubulaire rotatifs (26).

8. Répartiteur d'admission selon la revendication 6, caractérisé en ce que la couronne dentée (49) est disposée à l'extérieur desdits éléments tubulaires rotatifs (26).
